(19) Europäisches Patentamt
European Patent Office
Office européen des brevets

(11) **EP 3 032 308 A1**

(12) **EUROPEAN PATENT APPLICATION**

(43) Date of publication:
**15.06.2016 Bulletin 2016/24**

(51) Int Cl.:
***G02B 13/00*** *(2006.01)*  ***G02B 9/60*** *(2006.01)*
***G02B 13/18*** *(2006.01)*

(21) Application number: **15151904.8**

(22) Date of filing: **21.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.12.2014 TW 103142579**

(71) Applicant: **Calin Technology Co., Ltd.
Taichung City 427 (TW)**

(72) Inventors:
• **Hsu, Shu-Chuan
Taichung City 402 (TW)**
• **Huang, Je-Yi
Sihu Township, Yunlin County 654 (TW)**

(74) Representative: **Viering, Jentschura & Partner mbB
Patent- und Rechtsanwälte
Kennedydamm 55 / Roßstrasse
40476 Düsseldorf (DE)**

(54) **Imaging lens**

(57)     An imaging lens (1, 2, 3, 4) includes an aperture (ST) and a first to a fifth lenses (L1-L5) in order from an object side to an image side. The first lens (L1) is a positive meniscus lens made of glass, which has at least one aspheric surface (S2, S3). The Abbe number of the first lens (L1) is no less than 60. The second lens (L2) is a negative meniscus lens made of plastic, which has at least one aspheric surface (S4, S5). The third lens (L3) is a positive meniscus lens made of plastic, which has at least one aspheric surface (S6, S7). The fourth lens (L4) is a positive meniscus lens made of plastic, which has at least one aspheric surface (S8, S9). The fifth lens (L5) is a negative lens made of plastic, and both surfaces (S10, S11) thereof are aspherical. A diopter of the fifth lens (L5) gradually turns from negative to positive from where an optical axis (Z) passes through to a margin thereof.

FIG. 1

**Description**

**BACKGROUND OF THE INVENTION**

**1. Technical Field**

The present invention relates generally to optics, and more particularly to an imaging lens.

**2. Description of Related Art**

With the recent development of mobile devices, the market demand for lens modules rises. In consideration of convenience and portability, the market prefers mobile devices to be miniature and lightweight, and as a result, various industries such as automotive industry, video game industry, household appliances industry, etc. also start using miniature optical module to develop more convenient functions.

It's needless to say that the size of the imaging lenses applied in miniature mobile devices is also greatly reduced in recent years, and since customers would like the image resolution of photos taken by such mobile devices to be satisfying high, the imaging lenses must be able to provide high optical performance. Therefore, miniature size and high optical performance are two key requirements for imaging lenses in modern days.

In addition, the imaging lenses applied in mobile devices nowadays are getting wide angle; however, a wide angle system often has problems of limited view angle, distortion, and chromatic aberration, which affects the output image quality. In light of this, there is still room for improvement for the design of imaging lenses.

**BRIEF SUMMARY OF THE INVENTION**

In view of the above, the primary objective of the present invention is to provide an imaging lens which satisfies the requirements of miniature size, high optical performance, and wider view angle for a wide angle system.

The present invention provides an imaging lens, which includes, in order from an object side to an image side along an optical axis, an aperture, a first lens, a second lens, a third lens, a fourth lens, and a fifth lens. The first lens is made of glass, and is a positive meniscus lens, wherein a convex surface thereof faces the object side, and a concave surface thereof faces the image side; at least one of the surfaces of the first lens is aspheric; an Abbe number of first lens is no less than 60. The second lens is made of plastic, and is a negative meniscus lens, wherein a convex surface thereof faces the object side, and a concave surface thereof faces the image side; at least one of the surfaces of the second lens is aspheric. The third lens is made of plastic, and is a positive meniscus lens, wherein a convex surface thereof faces the image side, and a concave surface thereof faces the object side; at least one of the surfaces of the third lens is aspheric. The fourth lens is made of plastic, and is a positive meniscus lens, wherein a convex surface thereof faces the image side, and a concave surface thereof faces the object side; at least one of the surfaces of the fourth lens is aspheric. The fifth lens is made of plastic, and both surfaces thereof are aspheric; a diopter of the fifth lens gradually turns from negative to positive from where the optical axis passes through to a margin of the fifth lens.

In an embodiment, both surfaces of the first lens are aspheric.

In an embodiment, both surfaces of the second lens are aspheric.

In an embodiment, both surfaces of the third lens are aspheric.

In an embodiment, both surfaces of the fourth lens are aspheric.

In an embodiment, the surface of the fifth lens which faces the object side is concave at where the optical axis passes through; a radius of curvature of the surface of the fifth lens which faces the object side is negative at where the optical axis passes through, and gradually turns from negative to positive from where the optical axis passes through to the margin of the fifth lens.

In an embodiment, the surface of the fifth lens which faces the object side is convex at where the optical axis passes through; a radius of curvature of the surface of the fifth lens which faces the object side is positive at where the optical axis passes through, and gradually turns from positive to negative and positive again from where the optical axis passes through to the margin of the fifth lens.

In an embodiment, a surface of the fifth lens which faces the image side is concave at where the optical axis passes through; a radius of curvature of the surface of the fifth lens which faces the image side is p positive at where the optical axis passes through, and the radius of curvature gradually turns from positive to negative from where the optical axis passes through to the margin of the fifth lens.

In an embodiment, the imaging lens further satisfies: $0.74 \leq f1/f \leq 0.85$; where f1 is a focal length of the first lens; f is a focal length of the imaging lens.

In an embodiment, the imaging lens further satisfies: $-1.6 \leq f2/f \leq -1.3$; where f2 is a focal length of the second lens; f is a focal length of the imaging lens.

In an embodiment, the imaging lens further satisfies: $3.8 \leq f3/f \leq 5.1$; where f3 is a focal length of the third lens; f is a focal length of the imaging lens.

In an embodiment, the imaging lens further satisfies: $0.75 \leq f4/f \leq 0.96$; where f4 is a focal length of the fourth lens; f is a focal length of the imaging lens.

In an embodiment, the imaging lens further satisfies: $-0.70 \leq f5/f \leq -0.54$; where f5 is a focal length of the fifth lens; f is a focal length of the imaging lens.

In an embodiment, the imaging lens further satisfies: $1.16 \leq TTL/f \leq 1.20$; where f is a focal length of the imaging lens; TTL is a total length of the image lens.

In an embodiment, the imaging lens further satisfies: $0.69 \leq IMH/TTL \leq 0.78$; where IMH is a height of an imaging plane of the imaging lens; TTL is a total length of the image lens.

In an embodiment, the imaging lens further satisfies: $1.9 \leq f1/R1 \leq 2.2$; where f1 is a focal length of the first lens; R1 is a radius of curvature of the surface of the first lens which faces the object side at where the optical axis passes through.

With the aforementioned structure and materials of the lenses, the purpose of getting miniature size and high optical performance can be achieved. In addition, the visible angle of a wide angle system can be effectively widened as well.

## BRIEF DESCRIPTION OF THE SEVERAL VIEWS OF THE DRAWINGS

The present invention will be best understood by referring to the following detailed description of some illustrative embodiments in conjunction with the accompanying drawings, in which

FIG. 1 is a schematic diagram of a first preferred embodiment of the present invention;
FIG. 2A is a diagram showing the field curvature of the imaging lens of the first preferred embodiment of the present invention;
FIG. 2B is a diagram showing the distortion of the imaging lens of the first preferred embodiment of the present invention;
FIG. 2C is a diagram showing the spherical aberration of the imaging lens of the first preferred embodiment of the present invention;
FIG. 2D is a diagram showing the chromatic difference of magnification of the imaging lens of the first preferred embodiment of the present invention;
FIG. 3 is a schematic diagram of a second preferred embodiment of the present invention;
FIG. 4A is a diagram showing the field curvature of the imaging lens of the second preferred embodiment of the present invention;
FIG. 4B is a diagram showing the distortion of the imaging lens of the second preferred embodiment of the present invention;
FIG. 4C is a diagram showing the spherical aberration of the imaging lens of the second preferred embodiment of the present invention;
FIG. 4D is a diagram showing the chromatic difference of magnification of the imaging lens of the second preferred embodiment of the present invention;
FIG. 5 is a schematic diagram of a third preferred embodiment of the present invention;
FIG. 6A is a diagram showing the field curvature of the imaging lens of the third preferred embodiment of the present invention;
FIG. 6B is a diagram showing the distortion of the imaging lens of the third preferred embodiment of the present invention;
FIG. 6C is a diagram showing the spherical aberration of the imaging lens of the third preferred embodiment of the present invention;
FIG. 6D is a diagram showing the chromatic difference of magnification of the imaging lens of the third preferred embodiment of the present invention;
FIG. 7 is a schematic diagram of a fourth preferred embodiment of the present invention;
FIG. 8A is a diagram showing the field curvature of the imaging lens of the fourth preferred embodiment of the present invention;
FIG. 8B is a diagram showing the distortion of the imaging lens of the fourth preferred embodiment of the present invention;
FIG. 8C is a diagram showing the spherical aberration of the imaging lens of the fourth preferred embodiment of the present invention; and
FIG. 8D is a diagram showing the chromatic difference of magnification of the imaging lens of the fourth preferred embodiment of the present invention.

**DETAILED DESCRIPTION OF THE INVENTION**

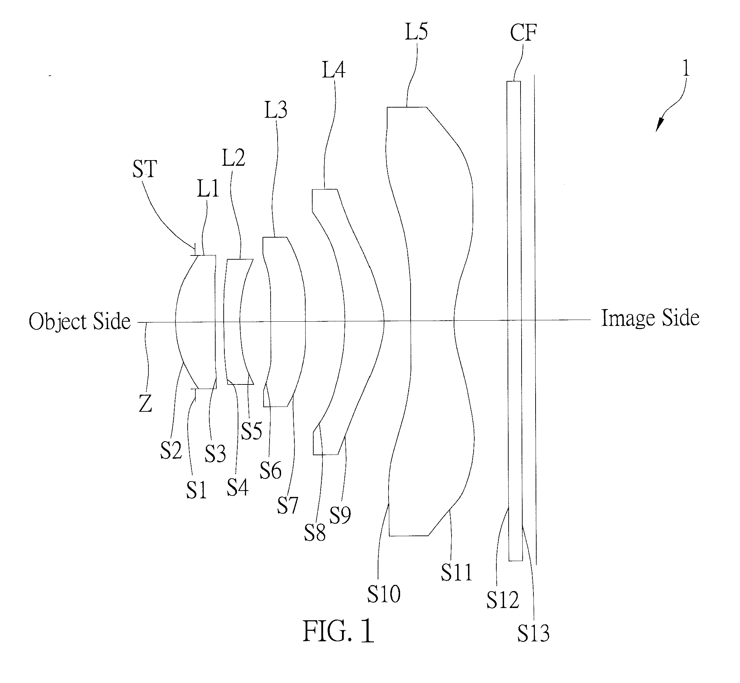

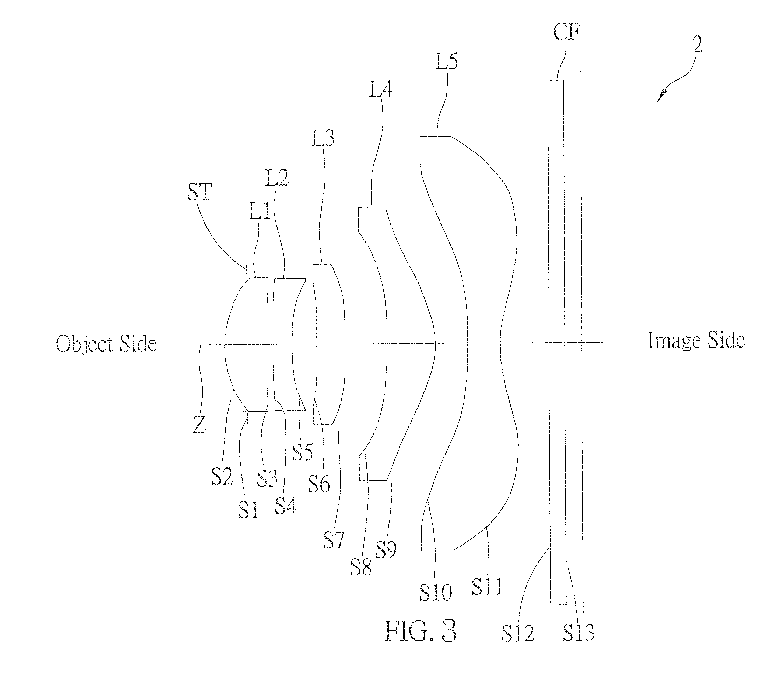

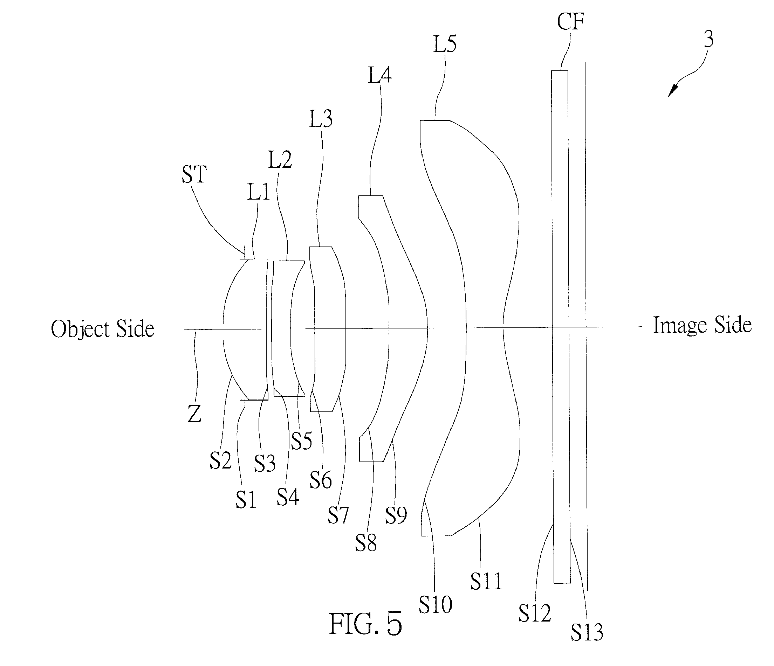

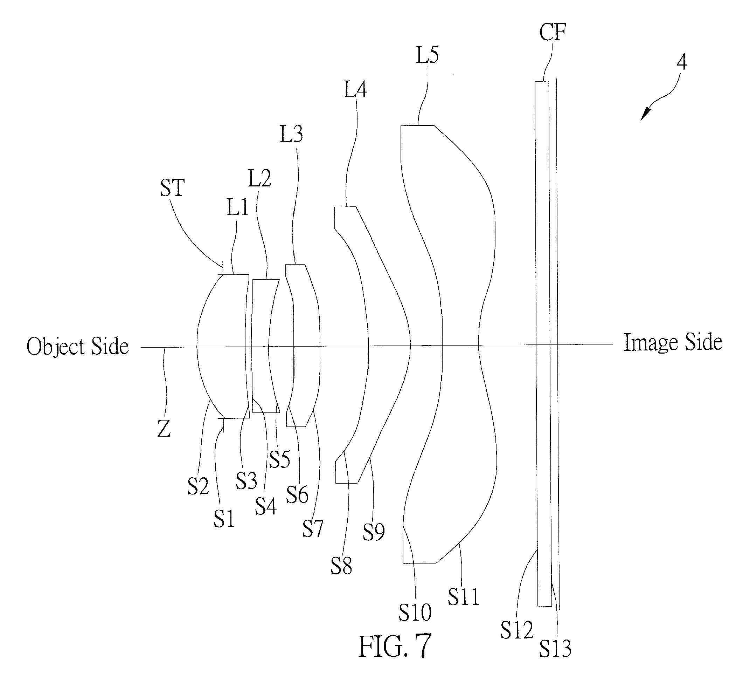

Image lenses 1-4 of the first to the fourth preferred embodiments of the present invention are respectively shown in FIG. 1, FIG. 3, FIG. 5, and FIG. 7. Each of the imaging lenses 1-4 includes, in order from an object side to an image side along an optical axis Z, an aperture ST, a first lens L1, a second lens L2, a third lens L3, a fourth lens L4, and a fifth lens L5, wherein a diopter of each lens L1-L5 is respectively positive, negative, positive, positive, and negative at where the optical axis goes through. Surfaces S2-S11 of the lenses L1-L5 are all aspheric. In addition, an optical filter CF is provided between the fifth lens L5 and the image side to filter out unwanted stray light if necessary, which helps to enhance optical performance.

In the imaging lenses 1-4 of the first to the fourth preferred embodiments of the present invention, the first lens L1 is a meniscus lens with the convex surface S2 facing the object side and the concave surface S3 facing the image side; the second lens L2 is a meniscus lens with the convex surface S4 facing the object side and the concave surface S5 facing the image side; the third lens L3 is a meniscus lens with the concave surface S6 facing the object side and the convex surface S7 facing the image side; the fourth lens L4 is a meniscus lens with the concave surface S8 facing the object side and the convex surface S9 facing the image side.

The difference between each preferred embodiment is about a radius of curvature of the fifth lens L5 at where the optical axis passes through. In the first preferred embodiment, the surface S10 of the fifth lens L5 of the imaging lens 1 which faces the object side is convex (i.e., the radius of curvature is positive) at where the optical axis passes through. Therefore, the radius of curvature of the surface S10 gradually turns from positive to negative and positive again from where the optical axis passes through to a margin of the fifth lens L5. The surface S11 of the fifth lens L5 of the imaging lens 1 which faces the image side is concave (i.e., the radius of curvature is negative) at where the optical axis passes through. Therefore, the radius of curvature of the surface S11 gradually turns from positive to negative from where the optical axis passes through to the margin of the fifth lens L5. Specifically, the surfaces S10, S11 are designed in a way that the diopter of the fifth lens L5 gradually turns from negative to positive from where the optical axis passes through to the margin of the fifth lens L5.

In the second, third, and fourth preferred embodiments, the surface S10 of the fifth lens L5 which faces the object side is concave (i.e., the radius of curvature is negative) at where the optical axis passes through. Therefore, the radius of curvature of the surface S10 gradually turns from negative to positive from where the optical axis passes through to a margin of the fifth lens L5. Similarly, the surfaces S10, S11 in these preferred embodiments are also designed in a way that the diopter of the fifth lens L5 gradually turns from negative to positive from where the optical axis passes through to the margin of the fifth lens L5.

The following Tables 1-4 respectively list a system focal length f of each of the imaging lenses 1-4 in the first to the fourth preferred embodiments, along with the radius of curvature R of each surface S2-S11 at where the optical axis Z passes through, a distance D between each surface S2-S11 and the next surface S2-S11 (or an imaging plane) along the optical axis Z, a material of each lens L1-L5, a refractive index Nd of each lens L1-L5, an Abbe number Vd of each lens L1-L5, and a focal length of each lens L1-L5. With these figures listed in Tables 1-4, the imaging lenses 1-4 of the first to the fourth preferred embodiments can effectively enhance optical performance.

Table 1 (the first preferred embodiment)

| f = 4.60 mm | | | | | | | |
|---|---|---|---|---|---|---|---|
| Surface | R(mm) | D(mm) | Material | Nd | Vd | Focal Length | Component |
| S1 | ∞ | -0.2825728 | | | | | Aperture ST |
| S2 | 1.712824 | 0.5740615 | glass | 1.516 | 64.1 | 3.418 | First Lens L1 |
| S3 | 46.75763 | 0.1323232 | | | | | |
| S4 | 6.241833 | 0.25 | plastic | 1.642 | 22.4 | -6.381 | Second Lens L2 |
| S5 | 2.447412 | 0.4742351 | | | | | |
| S6 | -9.613208 | 0.518274 | plastic | 1.531 | 55.7 | 23.15 | Third Lens L3 |
| S7 | -5.504177 | 0.5868162 | | | | | |
| S8 | -3.180978 | 0.57529 | plastic | 1.531 | 55.7 | 3.96 | Fourth Lens L4 |
| S9 | -1.348511 | 0.4113892 | | | | | |
| S10 | 80.11441 | 0.6403799 | plastic | 1.531 | 55.7 | -2.849 | Fifth Lens L5 |
| S11 | 1.486164 | 0.8159251 | | | | | |

(continued)

| f = 4.60 mm | | | | | | | |
|---|---|---|---|---|---|---|---|
| Surface | R(mm) | D(mm) | Material | Nd | Vd | Focal Length | Component |
| S12 | ∞ | 0.21 | glass | 1.5163 | 64.1 | | Optical Filter CF |
| S13 | ∞ | 0.199182 | | | | | |

Table 2 (the second preferred embodiment)

| f = 4.08 mm | | | | | | | |
|---|---|---|---|---|---|---|---|
| Surface | R(mm) | D(mm) | Material | Nd | Vd | Focal Length | Component |
| S1 | ∞ | -0.2937448 | | | | | Aperture ST |
| S2 | 1.515445 | 0.5496945 | glass | 1.516 | 64.1 | 3.14 | First Lens L1 |
| S3 | 19.5664 | 0.08711894 | | | | | |
| S4 | 9.096886 | 0.25 | plastic | 1.642 | 22.4 | -5.667 | Second Lens L2 |
| S5 | 2.587006 | 0.3660841 | | | | | |
| S6 | -29.49261 | 0.3622795 | plastic | 1.531 | 55.7 | 18.268 | Third Lens L3 |
| S7 | -7.350098 | 0.5733299 | | | | | |
| S8 | -3.709758 | 0.6293488 | plastic | 1.531 | 55.7 | 3.161 | Fourth Lens L4 |
| S9 | -1.226788 | 0.4465162 | | | | | |
| S10 | -13.71921 | 0.4204823 | plastic | 1.531 | 55.7 | -2.312 | Fifth Lens L5 |
| S11 | 1.368213 | 0.6633252 | | | | | |
| S12 | ∞ | 0.21 | glass | 1.516 | 64.1 | | Optical Filter CF |
| S13 | ∞ | 0.2259435 | | | | | |

Table 3 (the third preferred embodiment)

| f = 4.13 mm | | | | | | | |
|---|---|---|---|---|---|---|---|
| Surface | R(mm) | D(mm) | Material | Nd | Vd | Focal Length | Component |
| S1 | ∞ | -0.2937448 | | | | | Aperture ST |
| S2 | 1.531015 | 0.5455172 | glass | 1.516 | 64.1 | 3.16 | First Lens L1 |
| S3 | 20.9112 | 0.08448909 | | | | | |
| S4 | 6.025987 | 0.25 | plastic | 1.642 | 22.4 | -5.55 | Second Lens L2 |
| S5 | 2.214615 | 0.3512173 | | | | | |
| S6 | -26.0582 | 0.4031397 | plastic | 1.531 | 55.7 | 17.649 | Third Lens L3 |
| S7 | -6.947832 | 0.5748782 | | | | | |
| S8 | -3.591832 | 0.5040297 | plastic | 1.531 | 55.7 | 3.93 | Fourth Lens L4 |
| S9 | -1.387571 | 0.5038518 | | | | | |
| S10 | -38.35617 | 0.4828769 | plastic | 1.531 | 55.7 | -2.85 | Fifth Lens L5 |
| S11 | 1.588758 | 0.6643534 | | | | | |
| S12 | ∞ | 0.21 | glass | 1.516 | 64.1 | | Optical Filter CF |
| S13 | ∞ | 0.2123471 | | | | | |

Table 4 (the fourth preferred embodiment)

| f= 4.20 mm | | | | | | | |
|---|---|---|---|---|---|---|---|
| Surface | R(mm) | D(mm) | Material | Nd | Vd | Focal Length | Component |
| S1 | ∞ | -0.3572004 | | | | | Aperture ST |
| S2 | 1.63415 | 0.6660115 | glass | 1.514 | 63.3 | 3.54 | First Lens L1 |
| S3 | 13.17739 | 0.08 | | | | | |
| S4 | 7.71684 | 0.25 | plastic | 1.642 | 22.4 | -6.58 | Second Lens L2 |
| S5 | 2.714637 | 0.3454669 | | | | | |
| S6 | -32.75801 | 0.3620568 | plastic | 1.544 | 55.9 | 16.14 | Third Lens L3 |
| S7 | -6.977679 | 0.6659967 | | | | | |
| S8 | -3.811038 | 0.5840767 | plastic | 1.544 | 55.9 | 3.167 | Fourth Lens L4 |
| S9 | -1.254656 | 0.4463914 | | | | | |
| S10 | -9.844213 | 0.5 | plastic | 1.544 | 55.9 | -2.291 | Fifth Lens L5 |
| S11 | 1.460712 | 0.79 | | | | | |
| S12 | ∞ | 0.21 | glass | 1.516 | 64.1 | | Optical Filter CF |
| S13 | ∞ | 0.09661739 | | | | | |

In addition, for the lenses L1-L5 of the imaging lens 1-4 in the first to the fourth preferred embodiments, the surface concavities z of each aspheric surface S2-S11 is defined by the following formula:

$$z = \frac{ch^2}{1+\sqrt{1-(1+k)c^2h^2}} + \alpha_2 h^4 + \alpha_3 h^6 + \alpha_4 h^8 + \alpha_5 h^{10} + \alpha_6 h^{12} + \alpha_7 h^{14} + \alpha_8 h^{16}$$

where:

z is the surface concavity;
c is the reciprocal of the radius of curvature;
h is half the off-axis height of the surface;
k is conic constant; and
$\alpha_2$-$\alpha_8$ respectively represents different order coefficient of h.

The conic constant k and each order coefficient $\alpha_2$-$\alpha_8$ of the imaging lenses 1-4 of the first to the fourth preferred embodiments of the present invention are respectively listed in the following Tables 5-8.

Table 5 (the first preferred embodiment)

| Surface | S2 | S3 | S4 | S5 | S6 | S7 | S8 | S9 | S10 | S11 |
|---|---|---|---|---|---|---|---|---|---|---|
| k | 5.9617E-01 | 0.0000E+00 | -8.8331E+00 | -2.9481E+00 | 3.8365E+01 | -1.6192E+00 | -3.0815E-01 | -3.6278E+00 | 0.0000E+00 | -7.2273E+00 |
| $\alpha_2$ | -8.3308E-03 | 1.4134E-02 | -2.9099E-02 | -1.4534E-02 | -73833E-03 | -4.4792E-02 | 4.7924E-02 | 7.0162E-04 | -5.6445E-02 | -3.4428E-02 |
| $\alpha_3$ | 6.2117E-03 | 5.7061E-03 | 4.5224E-02 | 6.8389E-02 | -2.2024E-02 | -2.8886E-02 | -2.9412E-02 | 1.1146E-02 | 1.3456E-02 | 7.2546E-03 |
| $\alpha_4$ | -1.8983E-02 | 1.2890E-03 | -2.9620E-02 | -5.7993E-02 | 6.8094E-03 | 2.3744E-03 | 3.9516E-03 | -4.4592E-03 | -1.0960E-03 | -1.1661E-03 |
| $\alpha_5$ | 1.9090E-02 | 5.0054E-03 | 3.3398E-03 | 4.3876E-02 | 4.7428E-03 | 7.6584E-03 | -2.9983E-04 | 1.0441E-03 | -6.0624E-06 | 9.6667E-05 |
| $\alpha_6$ | 1.0265E-03 | -8.2726E-03 | 1.0722E-02 | 1.7635E-02 | -4.5471E-03 | -2.1962E-03 | 9.5026E-05 | -7.1742E-05 | 5.6638E-06 | -4.3113E-06 |
| $\alpha_7$ | -1.5311E-02 | 9.1380E-03 | -1.0908E-02 | -3.8802E-02 | -8.0226E-03 | -2.3912E-03 | 7.9551E-05 | -1.8552E-05 | -1.8855E-07 | 1.3449E-07 |
| $\alpha_8$ | 9.3208E-03 | -3.8935E-03 | 2.8963E-04 | 2.2571E-02 | 2.0204E-02 | 2.3485E-03 | -2.8944E-05 | 1.8912E-06 | -5.4416E-09 | -2.9635E-09 |

Table 6 (the second preferred embodiment)

| Surface | S2 | S3 | S4 | S5 | S6 | S7 | S8 | S9 | S10 | S11 |
|---|---|---|---|---|---|---|---|---|---|---|
| k | 3.8381E-01 | -1.2681E+01 | -3.7909E-01 | -1.2993E+00 | 0.0000E+00 | -5.3040E-01 | 3.8035E-02 | -3.7255E+00 | 1.8059E-01 | -7.3735E+00 |
| $\alpha_2$ | -9.8681E-03 | 9.6824E-03 | -2.6204E-02 | 1.0894E-03 | -7.8040E-02 | -4.3371E-02 | 4.8188E-02 | -1.5804E-02 | -9.0459E-02 | -5.9372E-02 |
| $\alpha_3$ | 3.3450E-03 | 1.4713E-02 | 7.9711E-02 | 1.2514E-01 | -5.5834E-02 | -6.6218E-02 | -3.6134E-02 | 2.2198E-02 | 2.7115E-02 | 1.5989E-02 |
| $\alpha_4$ | -5.2355E-02 | 1.8806E-02 | -7.5121E-02 | -1.6706E-01 | 1.2446E-02 | 1.3415E-02 | 5.9783E-03 | -1.0830E-02 | -2.7336E-03 | -2.9951E-03 |
| $\alpha_5$ | 6.5775E-02 | 9.3284E-05 | -1.3632E-02 | 1.3391E-01 | 6.3134E-02 | 2.2898E-02 | -1.8707E-03 | 3.5027E-03 | -2.6215E-05 | 3.0082E-04 |
| $\alpha_6$ | 1.5536E-02 | -7.9306E-02 | 5.4592E-02 | 1.0716E-01 | -2.6278E-02 | -1.3001E-02 | -1.6124E-04 | -3.4385E-04 | 2.2851E-05 | -1.9067E-05 |
| $\alpha_7$ | -9.7962E-02 | 8.5861E-02 | -2.2319E-02 | -2.1875E-01 | -8.6017E-02 | -1.1091E-02 | 4.3226E-04 | -1.0518E-04 | -1.2019E-06 | 8.2203E-07 |
| $\alpha_8$ | 6.3604E-02 | -2.2609E-02 | -2.2512E-02 | 1.1140E-01 | 1.0482E-01 | 1.5029E-02 | -4.3787E-05 | 1.9582E-05 | 3.4977E-09 | -1.6587E-08 |

Table 7 (the third preferred embodiment)

| Surface | S2 | S3 | S4 | S5 | S6 | S7 | S8 | S9 | S10 | S11 |
|---|---|---|---|---|---|---|---|---|---|---|
| k | 3.9150E-01 | 0.0000E+00 | 0.0000E+00 | -2.4546E+00 | 0.0000E+00 | 0.0000E+00 | 0.0000E+00 | -3.7647E+00 | 0.0000E+00 | -7.5586E+00 |
| $\alpha_2$ | -5.7779E-03 | 1.6991E-02 | -3.9016E-02 | -8.3681E-03 | -7.8950E-02 | -4.8208E-02 | 4.1265E-02 | -1.2769E-02 | -9.4499E-02 | -5.5702E-02 |
| $\alpha_3$ | 3.3351E-02 | 2.1196E-02 | 8.3384E-02 | 1.3016E-01 | -4.5573E-02 | -6.0929E-02 | -3.6661E-02 | 2.1955E-02 | 2.7143E-02 | 1.4914E-02 |
| $\alpha_4$ | -5.4331E-02 | 1.0720E-02 | -7.1320E-02 | -1.6012E-01 | 1.3647E-02 | 1.3597E-02 | 5.0974E-03 | -1.0931E-02 | -2.7193E-03 | -2.9782E-03 |
| $\alpha_5$ | 6.8898E-02 | 5.3705E-03 | -2.2895E-02 | 1.1730E-01 | 5.7308E-02 | 2.4117E-02 | -2.2340E-03 | 3.4853E-03 | -2.4300E-05 | 3.0673E-04 |
| $\alpha_6$ | 2.0136E-02 | -6.8084E-02 | 5.3150E-02 | 1.0781E-01 | -1.1311E-02 | -1.1592E-02 | -2.2083E-04 | -3.4607E-04 | 2.3050E-05 | -1.8865E-05 |
| $\alpha_7$ | -9.6963E-02 | 8.5647E-02 | -2.1844E-02 | -2.1746E-01 | -8.6087E-02 | -1.2502E-02 | 4.5259E-04 | -1.0511E-04 | -1.1879E-06 | 8.0303E-07 |
| $\alpha_8$ | 6.4042E-02 | -2.3459E-02 | -2.1584E-02 | 1.1272E-01 | 1.0250E-01 | 1.4936E-02 | -1.9849E-05 | 1.9798E-05 | 2.7928E-09 | -1.6311E-08 |

Table 8 (the fourth preferred embodiment)

| Surface | S2 | S3 | S4 | S5 | S6 | S7 | S8 | S9 | S10 | S11 |
|---|---|---|---|---|---|---|---|---|---|---|
| k | -3.8209E-01 | 1.6118E+02 | 2.0466E+01 | -4.3611E+00 | -2.5190E+02 | -9.5723E+00 | -2.0817E+00 | -3.7930E+00 | 4.1990E+00 | -7.9121E+00 |
| $\alpha_2$ | 7.7357E-03 | -4.4202E-02 | -1.0889E-01 | -4.8835E-02 | -9.1648E-02 | -5.6683E-02 | 2.8871E-02 | -2.9847E-02 | -7.0513E-02 | -5.0001E-02 |
| $\alpha_3$ | 8.5634E-02 | 1.1795E-01 | 1.5684E-01 | 1.4657E-01 | -4.0292E-02 | -3.9870E-02 | -2.3823E-02 | 3.1231E-02 | 2.2607E-02 | 1.3518E-02 |
| $\alpha_4$ | -1.8319E-01 | -1.3045E-01 | -7.3319E-02 | -1.6265E-01 | -3.5119E-02 | -2.2895E-02 | 4.0957E-03 | -1.3362E-02 | -2.4760E-03 | -2.5504E-03 |
| $\alpha_5$ | 2.0437E-01 | 1.3145E-01 | -1.0495E-01 | 7.2527E-02 | 1.0417E-01 | 5.0332E-02 | -2.2113E-03 | 3.4118E-03 | 8.1762E-06 | 2.7500E-04 |
| $\alpha_6$ | -1.3526E-02 | -1.2661E-01 | 1.2278E-01 | 1.2177E-01 | -4.8535E-02 | -1.9482E-02 | -1.5640E-04 | -2.5116E-04 | 2.1380E-05 | -2.0579E-05 |
| $\alpha_7$ | -1.1899E-01 | 8.5146E-02 | -2.1900E-02 | -2.1847E-01 | -9.9189E-02 | -2.1199E-02 | 4.4321E-04 | -8.2305E-05 | -1.7150E-06 | 1.1779E-06 |
| $\alpha_8$ | 6.3988E-02 | -2.3943E-02 | -2.2200E-02 | 1.1218E-01 | 1.0482E-01 | 2.0366E-02 | -6.0892E-05 | 1.3067E-05 | 4.1424E-08 | -3.4018E-08 |

In addition, with the aperture ST and the aforementioned aspheric design for the lenses L1-L5, the problem of distortion which tends to happen in wide angle optical design can be effectively fixed. Moreover, the first lens L1 is made of glass, and through the arrangement of diopters of the lenses L1-L5 as positive, negative, positive, positive, and negative, the imaging lenses 1-4 can provide high imaging quality, which effectively achieves the purpose of getting miniature size, providing wide angle, and eliminating optical distortion. Specifically, the imaging lenses 1-4 satisfy the following rules:

(1) $60 \leq Vd1$;
(2) $0.74 \leq f1/f \leq 0.85$;
(3) $-1.6 \leq f2/f \leq -1.3$;
(4) $3.8 \leq f3/f \leq 5.1$;
(5) $0.75 \leq f4/f \leq 0.96$;
(6) $-0.70 \leq f5/f \leq -0.54$;
(7) $1.16 \leq TTL/f \leq 1.20$;
(8) $0.69 \leq IMH/TTL \leq 0.78$;
(9) $1.9 \leq f1/R1 \leq 2.2$;

where, Vdlis the Abbe number of the first lens L1; R1 is the radius of curvature of the surface S2 of the first lens L1, which faces the object side, at where the optical axis passes through; f is the focal length of the imaging lenses 1-4; f1 is the focal length of the first lens L1; f2 is the focal length of the second lens L2; f3 is the focal length of the third lens L3; f4 is the focal length of the fourth lens L4; f5 is the focal length of the fifth lens L5; IMH is a height of the imaging plane of the imaging lenses 1-4; TTL is a total length of the imaging lenses 1-4.

When rules (1) to (3) are satisfied, field curvature of each of the imaging lenses 1-4 can be significantly improved; when rules (4) to (6) are satisfied, peripheral distortion, chromatic difference of magnification, and spherical aberration can be effectively eliminated. In addition, with the aspheric shape of the fifth lens L5, the light passing through the periphery of the fifth lens L5 is effectively suppressed, and therefore the incidence angle is reduced, which eases the melange effect happens due to large incidence angle. When rules (7) to (9) are satisfied, the total length of the imaging lenses 1-4 can be greatly shortened. In other words, if the above rules are not satisfied, the problem of poor chromatic difference of magnification and low imaging quality would arise; furthermore, the size of the lens cannot be miniature either.

The detailed figures of the imaging lenses 1-4 of the first to the fourth preferred embodiments of the present invention are listed in Table 9.

Table 9

| | First Preferred Embodiment | Second Preferred Embodiment | Third Preferred Embodiment | Fourth Preferred Embodiment |
|---|---|---|---|---|
| f | 4.6 | 4.08 | 4.13 | 4.2 |
| TTL | 5.4 | 4.78 | 4.8 | 5 |
| IMH | 3.775 | 3.7 | 3.53 | 3.7 |
| f1 | 3.418 | 3.14 | 3.16 | 3.54 |
| f2 | -6.382 | -5.66 | -5.54 | -6.58 |
| f3 | 23.15 | 18.26 | 17.65 | 16.14 |
| f4 | 3.96 | 3.16 | 3.93 | 3.16 |
| f5 | -2.845 | -2.31 | -2.85 | -2.29 |
| R1 | 1.713 | 1.515 | 1.53 | 1.63 |
| | | | | |
| Vd1 | 64.1 | 64.1 | 64.1 | 63.3 |
| f1/f | 0.743 | 0.769 | 0.765 | 0.842 |
| f2/f | -1.387 | -1.387 | -1.341 | -1.566 |
| f3/f | 5.032 | 4.475 | 4.273 | 3.842 |
| f4/f | 0.860 | 0.774 | 0.951 | 0.752 |

(continued)

| | First Preferred Embodiment | Second Preferred Embodiment | Third Preferred Embodiment | Fourth Preferred Embodiment |
|---|---|---|---|---|
| f5/f | -0.618 | -0.566 | -0.690 | -0.545 |
| TTL/f | 1.173 | 1.171 | 1.162 | 1.190 |
| IMH/TTL | 0.699 | 0.7747 | 0.735 | 0.740 |
| f1/R | 1.995 | 2.072 | 2.065 | 2.171 |

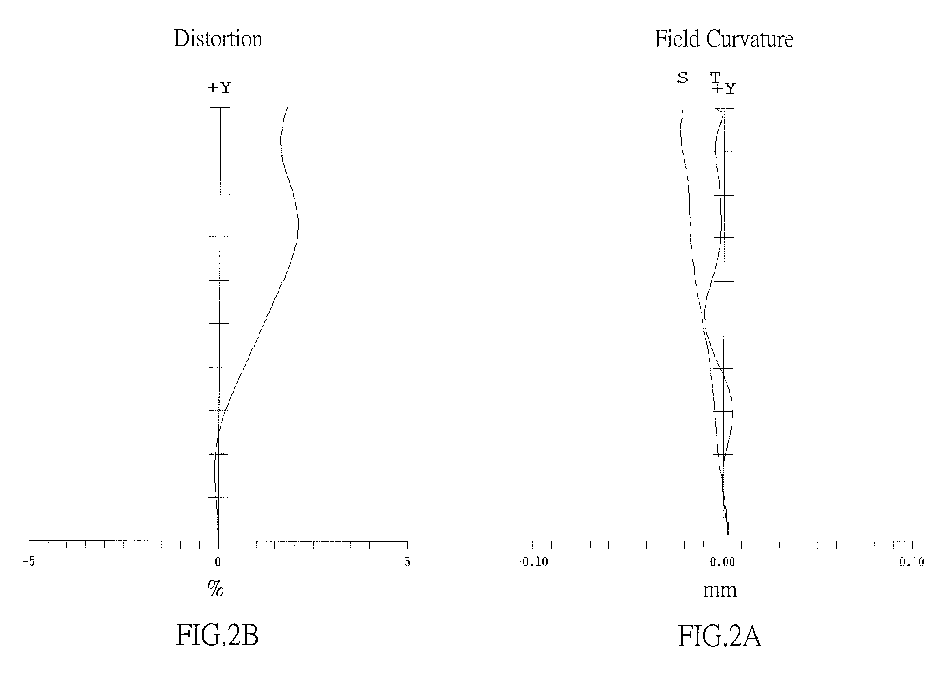

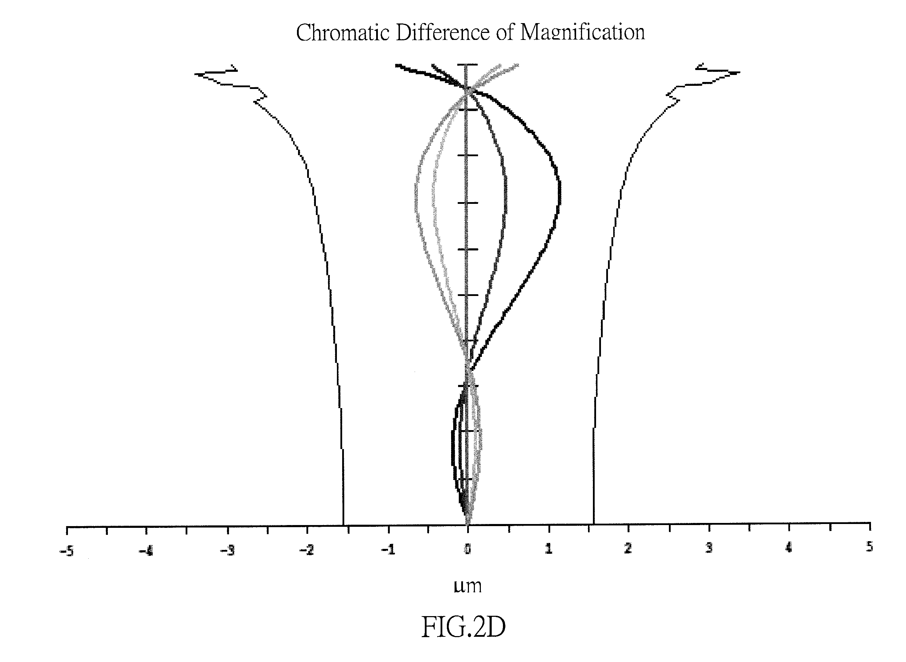

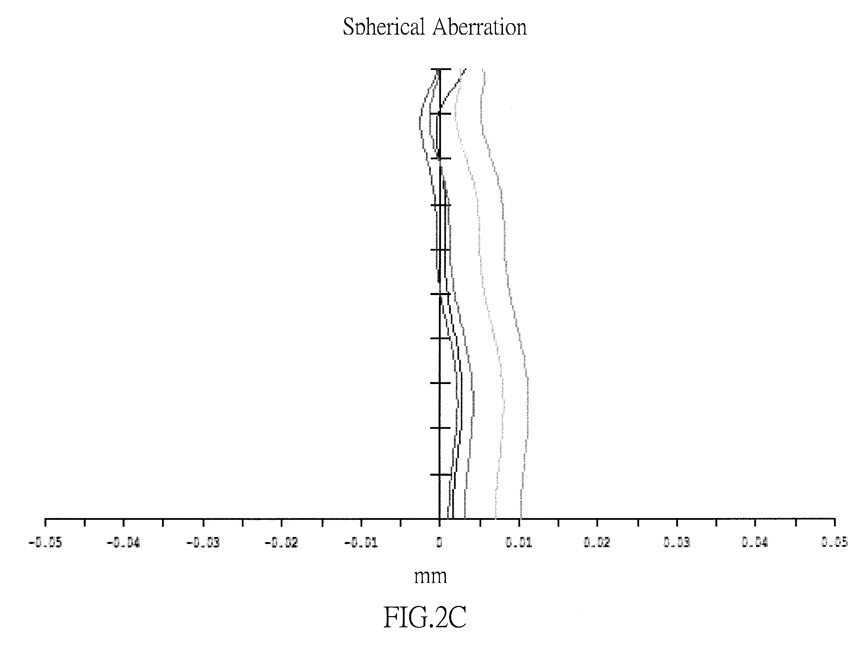

As shown in FIG. 2A to 2D, the imaging lens 1 of the first preferred embodiment of the present invention is able to provide high imaging quality, wherein the maximum field curvature of the imaging lens 1 does not exceed -0.03mm and 0.01mm, which can be seen in FIG. 2A; the maximum distortion of the imaging lens 1 does not exceed -0.5% and 2.5%, which can be seen in FIG. 2B; the spherical aberration of the imaging lens 1 does not exceed -0.005 mm and 0.015mm, which can be seen in FIG. 2C; the chromatic difference of magnification of the imaging lens 1 does not exceed -1$\mu$m and 1.5$\mu$m, which can be seen in FIG. 2D. In other words, the imaging lens 1 provides high optical performance.

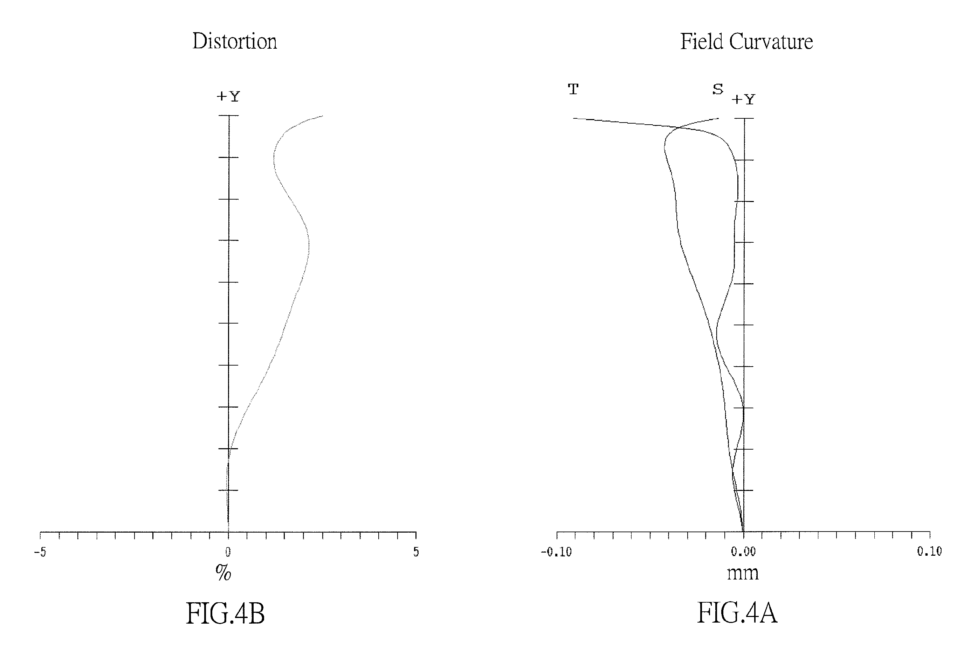

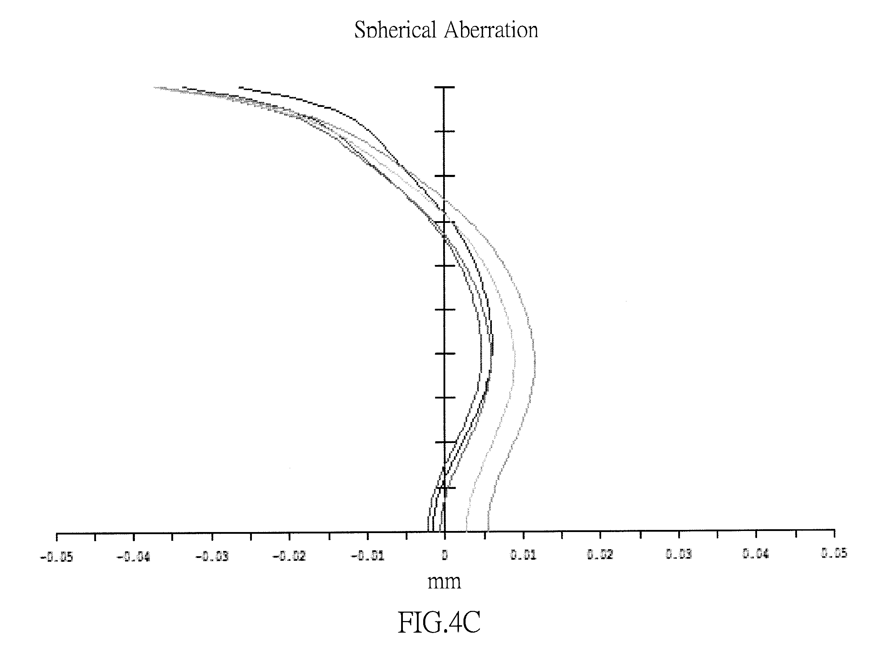

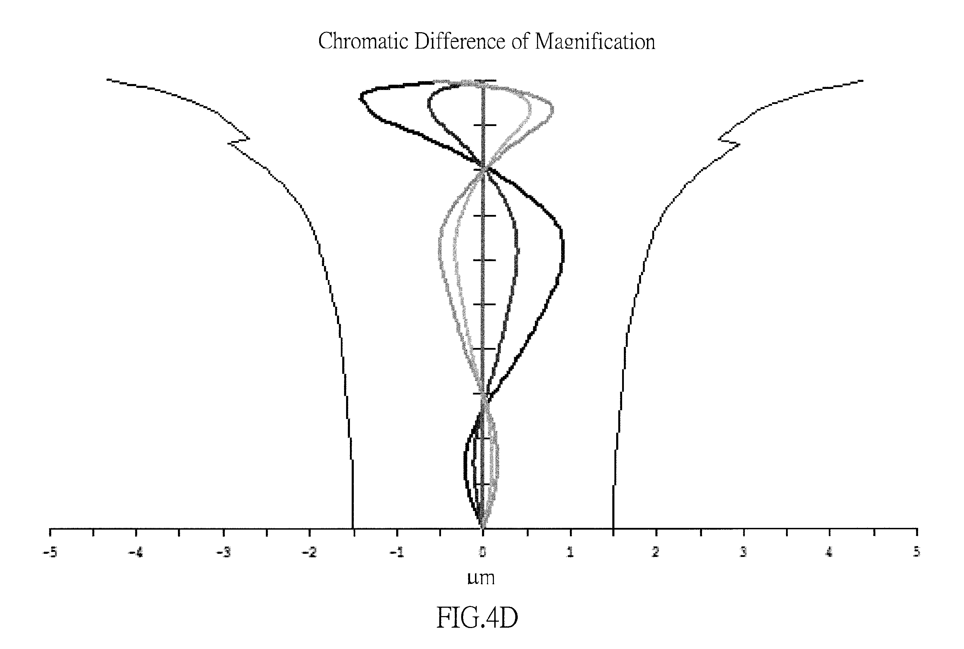

Similarly, as shown in FIG. 4A to 4D, the imaging lens 2 of the second preferred embodiment of the present invention is also able to provide high imaging quality, wherein the maximum field curvature of the imaging lens 2 does not exceed -0.01mm and 0mm, which can be seen in FIG. 4A; the maximum distortion of the imaging lens 2 does not exceed 0.5% and 2.5%, which can be seen in FIG. 4B; the spherical aberration of the imaging lens 2 does not exceed -0.04mm and 0.015mm, which can be seen in FIG. 4C; the chromatic difference of magnification of the imaging lens 2 does not exceed -1.5$\mu$m and 1$\mu$m, which can be seen in FIG. 4D. In other words, the imaging lens 2 provides high optical performance.

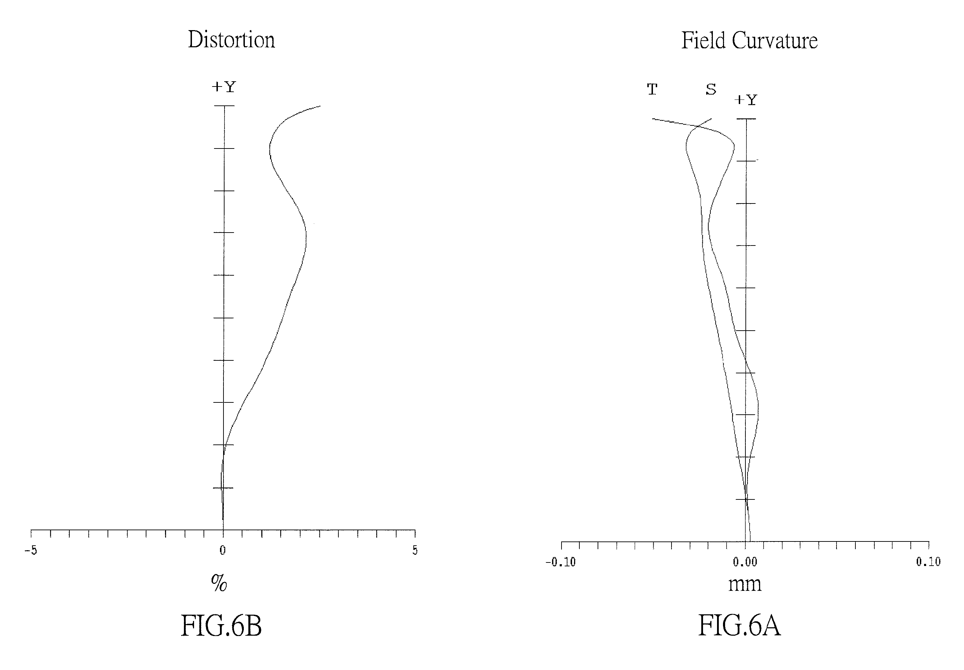

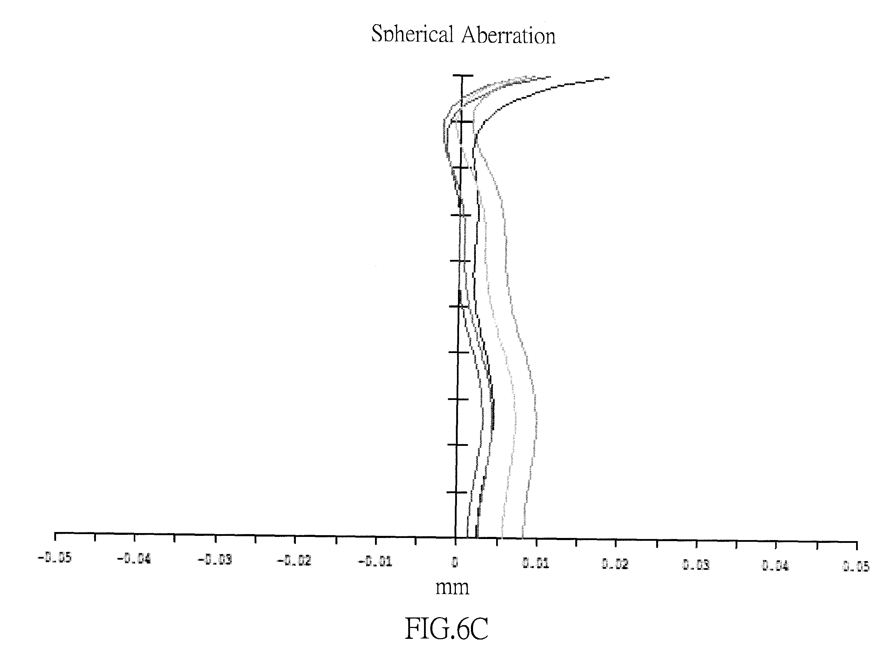

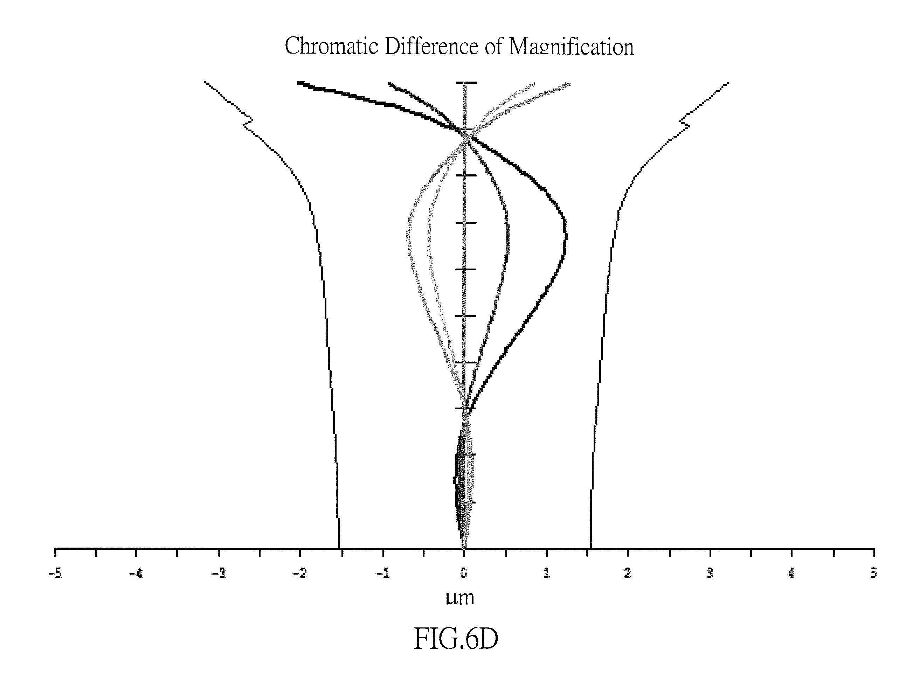

In addition, as shown in FIG. 6A to 6D, the imaging lens 3 of the third preferred embodiment of the present invention is also able to provide high imaging quality, wherein the maximum field curvature of the imaging lens 3 does not exceed -0.06mm and 0.01mm, which can be seen in FIG. 6A; the maximum distortion of the imaging lens 3 does not exceed 0% and 3%, which can be seen in FIG. 6B; the spherical aberration of the imaging lens 3 does not exceed -0.005 mm and 0.02mm, which can be seen in FIG. 6C; the chromatic difference of magnification of the imaging lens 3 does not exceed -2.5$\mu$m and 1.5$\mu$m, which can be seen in FIG. 6D. In other words, the imaging lens 3 provides high optical performance.

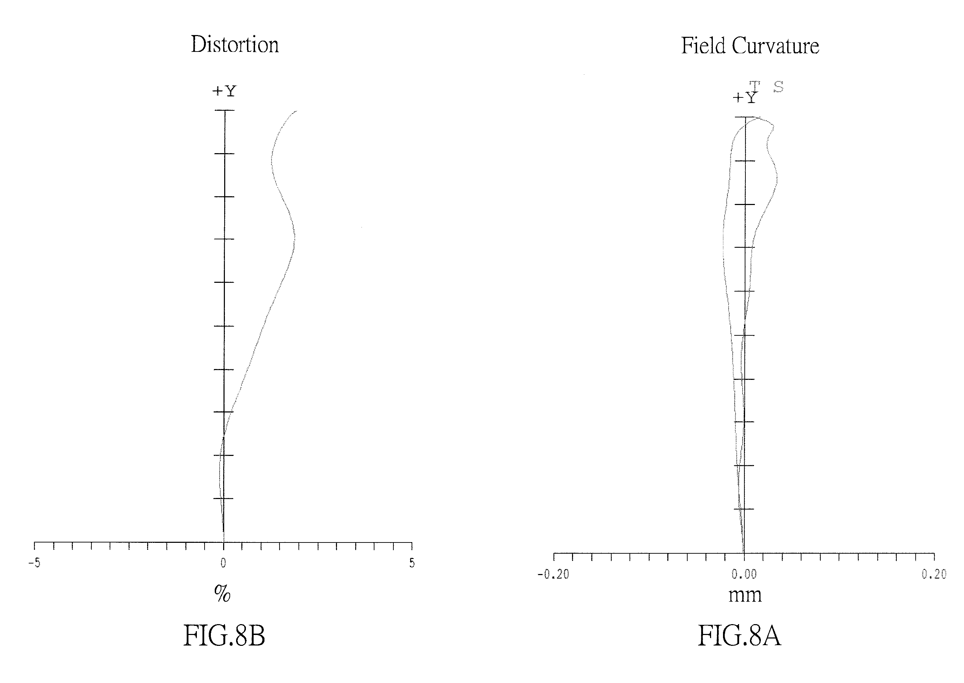

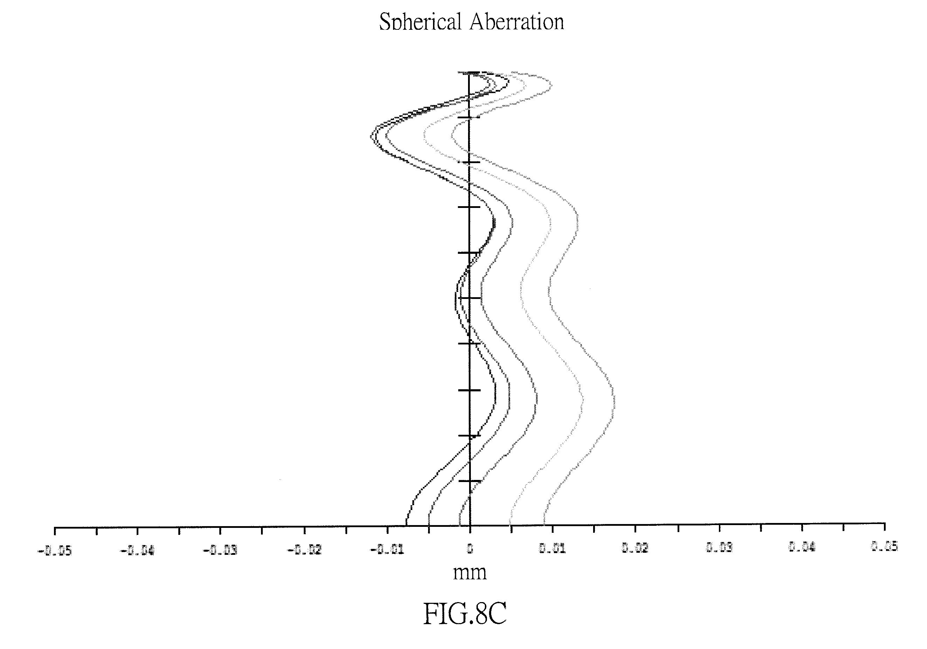

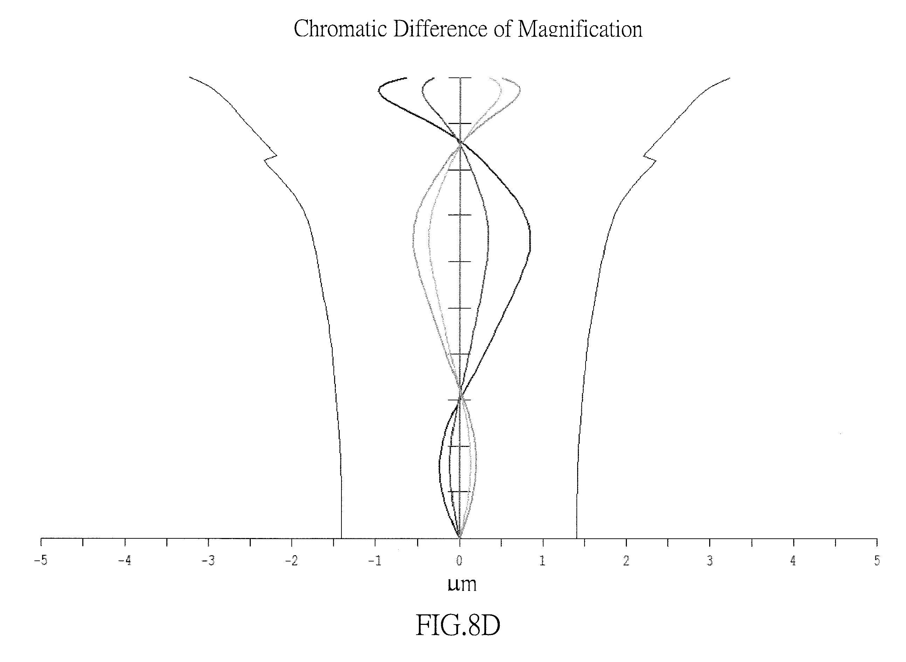

Finally, as shown in FIG. 8A to 8D, the imaging lens 4 of the fourth preferred embodiment of the present invention is also able to provide high imaging quality, wherein the maximum field curvature of the imaging lens 4 does not exceed -0.04mm and 0.04mm, which can be seen in FIG. 8A; the maximum distortion of the imaging lens 4 does not exceed 0.5% and 2%, which can be seen in FIG. 8B; the spherical aberration of the imaging lens 4 does not exceed -0.015mm and 0.02mm, which can be seen in FIG. 8C; the chromatic difference of magnification of the imaging lens 4 does not exceed -1$\mu$m and 1$\mu$m, which can be seen in FIG. 8D. In other words, the imaging lens 4 also provides high optical performance.

In summary, with the imaging lenses 1-4 provided in the present invention, the purpose of getting miniature size and high optical performance can be effectively achieved. In addition, the visible angle of a wide angle system which uses any of the imaging lenses 1-4 can be broadened.

It must be pointed out that the embodiments described above are only some preferred embodiments of the present invention. All equivalent structures which employ the concepts disclosed in this specification and the appended claims should fall within the scope of the present invention.

**Claims**

**1.** An imaging lens (1, 2, 3, 4), in order from an object side to an image side along an optical axis (Z), comprising:

an aperture (ST);
a first lens (L1) made of glass, which is a positive meniscus lens, wherein a convex surface (S2) thereof faces the object side, and a concave surface (S3) thereof faces the image side; at least one of the surfaces (S2, S3) of the first lens (L1) is aspheric; an Abbe number of first lens (L1) is no less than 60;
a second lens (L2) made of plastic, which is a negative meniscus lens, wherein a convex surface (S4) thereof faces the object side, and a concave surface (S5) thereof faces the image side; at least one of the surfaces (S4, S5) of the second lens (L2) is aspheric;
a third lens (L3) made of plastic, which is a positive meniscus lens, wherein a convex surface (S6) thereof faces the image side, and a concave surface (S7) thereof faces the object side; at least one of the surfaces (S6, S7) of the third lens (L3) is aspheric;

a fourth lens (L4) made of plastic, which is a positive meniscus lens, wherein a convex surface (S8) thereof faces the image side, and a concave surface (S9) thereof faces the object side; at least one of the surfaces (S8, S9) of the fourth lens (L4) is aspheric;

a fifth lens (L5) made of plastic, wherein both surfaces (S10, S11) of the fifth lens (L5) are aspheric; a diopter of the fifth lens (L5) gradually turns from negative to positive from where the optical axis (Z) passes through to a margin of the fifth lens (L5).

2. The imaging lens (1, 2, 3, 4) of claim 1, wherein the surfaces (S2, S3) of the first lens (L1) are both aspheric.

3. The imaging lens (1, 2, 3, 4) of claim 1, wherein the surfaces (S4, S5) of the second lens (L2) are both aspheric.

4. The imaging lens (1, 2, 3, 4) of claim 1, wherein the surfaces (S6, S7) of the third lens (L3) are both aspheric.

5. The imaging lens (1, 2, 3, 4) of claim 1, wherein the surfaces (S8, S9) of the fourth lens (L4) are both aspheric.

6. The imaging lens (2, 3, 4) of claim 1, wherein the surface (S10) of the fifth lens (L5) which faces the object side is concave at where the optical axis (Z) passes through.

7. The imaging lens (2, 3, 4) of claim 6, wherein a radius of curvature of the surface (S11) of the fifth lens (L5) which faces the object side is negative at where the optical axis (Z) passes through, and gradually turns from negative to positive from where the optical axis (Z) passes through to the margin of the fifth lens (L5).

8. The imaging lens (1) of claim 1, wherein the surface (S10) of the fifth lens (L5) which faces the object side is convex at where the optical axis (Z) passes through.

9. The imaging lens (1) of claim 8, wherein a radius of curvature of the surface (S10) of the fifth lens (L5) which faces the object side is positive at where the optical axis (Z) passes through, and gradually turns from positive to negative and positive again from where the optical axis (Z) passes through to the margin of the fifth lens (L5).

10. The imaging lens (1, 2, 3, 4) of claim 1, wherein a surface (S11) of the fifth lens (L5) which faces the image side is concave at where the optical axis (Z) passes through.

11. The imaging lens (1, 2, 3, 4) of claim 10, wherein a radius of curvature of the surface (S11) of the fifth lens (L5) which faces the image side is p positive at where the optical axis (Z) passes through, and the radius of curvature gradually turns from positive to negative from where the optical axis (Z) passes through to the margin of the fifth lens (L5).

12. The imaging lens (1, 2, 3, 4) of claim 1, further satisfying:

$0.74 \leq f1/f \leq 0.85$;
where f1 is a focal length of the first lens (L1); f is a focal length of the imaging lens (1, 2, 3, 4).

13. The imaging lens (1, 2, 3, 4) of claim 1, further satisfying:

$- 1.6 \leq f2/f \leq -1.3$;
where f2 is a focal length of the second lens (L2); f is a focal length of the imaging lens(1, 2, 3, 4).

14. The imaging lens (1, 2, 3, 4) of claim 1, further satisfying:

$3.8 \leq f3/f \leq 5.1$;
where f3 is a focal length of the third lens (L3); f is a focal length of the imaging lens (1, 2, 3, 4).

15. The imaging lens (1, 2, 3, 4) of claim 1, further satisfying:

$0.75 \leq f4/f \leq 0.96$;
where f4 is a focal length of the fourth lens (L4); f is a focal length of the imaging lens (1, 2, 3, 4).

**16.** The imaging lens (1, 2, 3, 4) of claim 1, further satisfying:

- 0.70 $\leq$ f5/f $\leq$ -0.54;
where f5 is a focal length of the fifth lens (L5); f is a focal length of the imaging lens (1, 2, 3, 4).

**17.** The imaging lens (1, 2, 3, 4) of claim 1, further satisfying:

1.16 $\leq$ TTL/f $\leq$ 1.20;
where f is a focal length of the imaging lens (1, 2, 3, 4); TTL is a total length of the image lens (1, 2, 3, 4).

**18.** The imaging lens (1, 2, 3, 4) of claim 1, further satisfying:

0.69 $\leq$ IMH/TTL $\leq$ 0.78;
where IMH is a height of an imaging plane of the imaging lens (1, 2, 3, 4); TTL is a total length of the image lens (1, 2, 3, 4).

**19.** The imaging lens (1, 2, 3, 4) of claim 1, further satisfying:

1.9 $\leq$ f1/R1 $\leq$ 2.2;
where f1 is a focal length of the first lens (L1); R1 is a radius of curvature of the surface (S2) of the first lens which faces the object side at where the optical axis passes through.

FIG. 1

Distortion

$+Y$

-5 ⊢───────┼───────⊣ 5
0

%

## FIG.2B

Field Curvature

S T
$+Y$

-0.10 ⊢───────┼───────⊣ 0.10
0.00

mm

## FIG.2A

FIG.2D

Spherical Aberration

mm

FIG.2C

FIG. 3

Distortion

+Y

-5 | | | | | 0 | | | | | 5
%

FIG.4B

Field Curvature

T                    S  +Y

-0.10          0.00          0.10
mm

FIG.4A

EP 3 032 308 A1

Spherical Aberration

mm

FIG.4C

FIG.4D

FIG. 5

Distortion

+Y

Field Curvature

T      S  +Y

-5            0            5

%

FIG.6B

-0.10        0.00        0.10

mm

FIG.6A

Spherical Aberration

mm

FIG.6C

Chromatic Difference of Magnification

um

FIG.6D

EP 3 032 308 A1

EP 3 032 308 A1

FIG. 7

Field Curvature

FIG.8A

Distortion

FIG.8B

Spherical Aberration

FIG.8C

Chromatic Difference of Magnification

um

FIG.8D

Europäisches
Patentamt

European
Patent Office

Office européen
des brevets

# EUROPEAN SEARCH REPORT

Application Number

EP 15 15 1904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/201567 A1 (TSAI TSUNG-HAN [TW] ET AL) 8 August 2013 (2013-08-08) <br> * paragraph [0080] - paragraph [0088]; figures 3,4; example 2; tables 3,4 * <br> * paragraph [0089] - paragraph [0097]; figures 5,6; example 3; tables 5,6 * <br> * paragraph [0052] * | 1-19 | INV. <br> G02B13/00 <br><br> ADD. <br> G02B9/60 <br> G02B13/18 |
| X | US 2012/140104 A1 (OZAKI YUICHI [JP]) 7 June 2012 (2012-06-07) <br> * examples 2,3,5 * | 1-19 | |
| X | US 2013/342919 A1 (TANG HSIANG-CHI [TW] ET AL) 26 December 2013 (2013-12-26) <br> * examples 4,10 * <br> * paragraph [0094] * | 1-19 | |
| A | Warren J. Smith: "Modern Lens Design" In: "Modern Lens Design", 1 January 1992 (1992-01-01), McGraw-Hill, Inc, XP055152035, ISBN: 978-0-07-059178-3 pages 25-27, <br> * page 27 * | 1 | TECHNICAL FIELDS SEARCHED (IPC) <br><br> G02B |

The present search report has been drawn up for all claims

| Place of search | Date of completion of the search | Examiner |
|---|---|---|
| Munich | 4 September 2015 | Muller, Nicolas |

## ANNEX TO THE EUROPEAN SEARCH REPORT
## ON EUROPEAN PATENT APPLICATION NO.

EP 15 15 1904

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2015

| Patent document cited in search report | | Publication date | Patent family member(s) | | Publication date |
|---|---|---|---|---|---|
| US 2013201567 | A1 | 08-08-2013 | CN | 103246050 A | 14-08-2013 |
| | | | CN | 202631836 U | 26-12-2012 |
| | | | TW | 201333521 A | 16-08-2013 |
| | | | US | 2013201567 A1 | 08-08-2013 |
| US 2012140104 | A1 | 07-06-2012 | US | 2012140104 A1 | 07-06-2012 |
| | | | WO | 2011021271 A1 | 24-02-2011 |
| US 2013342919 | A1 | 26-12-2013 | CN | 103513405 A | 15-01-2014 |
| | | | CN | 202837659 U | 27-03-2013 |
| | | | TW | 201248187 A | 01-12-2012 |
| | | | US | 2013342919 A1 | 26-12-2013 |

EPO FORM P0459

For more details about this annex : see Official Journal of the European Patent Office, No. 12/82